# EUROPÄISCHE PATENTANMELDUNG

(11) **EP 1 541 923 A1**
(43) Veröffentlichungstag der Anmeldung: **15.06.2005**
(21) Anmeldenummer: 04028929.0
(22) Anmeldetag: 07.12.2004
(51) Int. Cl.: F23C 11/00

(54) **System zum Umsetzen von Brennstoff und Luft zu Reformat**

(30) Priorität: 09.12.2003 DE 10357474
(71) Anmelder: Webasto AG, 82131 Stockdorf (DE)
(72) Erfinder: Lawrence, Jeremy, 17033 Neubrandenburg (DE)

(57) **Zusammenfassung**

Die Erfindung betrifft ein System zum Umsetzen von Brennstoff und Luft zu Reformat, mit einem Reformer (10), der einen Reaktionsraum (12) aufweist, einer zumindest abschnittsweise nach Art einer Venturidüse ausgebildeten Düse (14) zum Zuführen eines Brennstoff/Luft-Gemisches zu dem Reaktionsraum (12), wobei der nach Art einer Venturidüse ausgebildete Abschnitt der Düse (14) aufweist einen Bereich mit einem kleinsten Durchmesser, einen sich zwischen dem Bereich mit dem kleinsten Durchmesser und der Reaktionsraum erstreckenden Diffuser und erste Gaszufuhrmittel auf der dem Diffuser abgewandten Seite des Bereichs mit dem kleinsten Durchmesser, und einer Brennstoffzuführung (16) zum Zuführen von Brennstoff in die Düse.

Erfindungsgemäß ist vorgesehen, dass im Bereich mit dem kleinsten Durchmesser zweite Gaszufuhrmittel vorgesehen sind.

## Beschreibung

Die Erfindung betrifft ein System zum Umsetzen von Brennstoff und Luft zu Reformat, mit:
- einem Reformer, der einen Reaktionsraum aufweist,
- einer zumindest abschnittsweise nach Art einer Venturidüse ausgebildeten Düse zum Zuführen eines Brennstoff/Luft-Gemisches zu dem Reaktionsraum, wobei der nach Art einer Venturidüse ausgebildete Abschnitt der Düse aufweist:
   - einen Bereich mit einem kleinsten Durchmesser,
   - einen sich zwischen dem Bereich mit dem kleinsten Durchmesser und dem Reaktionsraum erstreckenden Diffuser und
   - erste Gaszufuhrmittel auf der dem Diffuser abgewandten Seite des Bereichs mit dem kleinsten Durchmesser, und
- einer Brennstoffzuführung zum Zuführen von Brennstoff in die Düse.

Ein derartiges System ist aus der WO03/022424 bekannt. Die gattungsgemäßen Systeme dienen der Umwandlung von chemischer Energie in elektrische Energie. Zu diesem Zweck werden dem Reformer Brennstoff und Luft, vorzugsweise in Form eines Brennstoff/Luft-Gemisches, zugeführt. In dem Reformer erfolgt dann eine Umsetzung des Brennstoffes mit dem Luftsauerstoff, wobei vorzugsweise das Verfahren der partiellen Oxidation durchgeführt wird.

Das so erzeugte Reformat wird dann einer Brennstoffzelle beziehungsweise einem Brennstoffzellenstack zugeführt, wobei durch die kontrollierte Umsetzung von Wasserstoff, als Bestandteil des Reformats, und Sauerstoff elektrische Energie freigesetzt wird.

Der Reformer kann, wie bereits erwähnt, so ausgelegt sein, dass das Verfahren der partiellen Oxidation durchgeführt wird, um Reformat zu erzeugen. In diesem Fall ist es bei der Verwendung von Diesel als Brennstoff besonders nützlich, vor der partiellen Oxidation Vorreaktionen durchzuführen. Auf diese Weise können mit "kalter Flamme" langkettige Dieselmoleküle in kürzerkettige Moleküle umgesetzt werden, was letztlich den Reformerbetrieb begünstigt. Allgemein wird der Reaktionszone des Reformers ein Gasgemisch zugeführt, welches zu H₂ und CO umgesetzt wird. Ein weiterer Bestandteil des Reformats sind N₂ aus der Luft sowie, in Abhängigkeit von der Luftzahl und der Temperatur, gegebenenfalls CO₂, H₂O und CH₄. Im Normalbetrieb wird der Brennstoffmassenstrom entsprechend der angeforderten Leistung geregelt, und der Luftmassenstrom wird auf eine Luftzahl im Bereich von λ, = 0,4 geregelt. Die Reformierungsreaktion kann durch unterschiedliche Sensoren, beispielsweise Temperatursensoren und Gassensoren, überwacht werden.

Neben dem Verfahren der partiellen Oxidation ist es ebenfalls möglich, eine autotherme Reformierung durchzuführen. Das Verfahren der partiellen Oxidation wird im Gegensatz zur autothermen Reformierung dadurch herbeigeführt, dass Sauerstoff unterstöchiometrisch zugeführt wird. Beispielsweise hat das Gemisch eine Luftzahl von λ, = 0,4. Die partielle Oxidation ist exotherm, so dass es in problematischer Weise zu einer unerwünschten Aufheizung des Reformers kommen kann. Ferner neigt die partielle Oxidation zu einer verstärkten Rußbildung. Zur Vermeidung der Rußbildung kann die Luftzahl λ, kleiner gewählt werden. Dies wird so erreicht, dass ein Teil des für die Oxidation verwendeten Sauerstoffs durch Wasserdampf bereitgestellt wird. Da die Oxidation mit Wasserdampf endotherm verläuft, ist es möglich, das Verhältnis zwischen Brennstoff, Sauerstoff und Wasserdampf so einzustellen, dass insgesamt weder Wärme freigesetzt noch Wärme verbraucht wird. Die so erreichte autotherme Reformierung beseitigt daher die Probleme der Rußbildung und einer unerwünschten Überhitzung des Reformers.

Ebenfalls ist es möglich, dass im Anschluss an die Oxidation in dem Reformer weitere Schritte der Gasbehandlung erfolgen, wobei insbesondere der partiellen Oxidation eine Metanisierung nachgeschaltet sein kann.

Ein gängiges Brennstoffzellensystem ist beispielsweise ein PEM-System ("proton exchange membrane"), welches typischerweise bei Betriebstemperaturen zwischen Raumtemperatur und etwa 100 °C betrieben werden kann. Aufgrund der niedrigen Betriebstemperaturen wird dieser Brennstoffzellentyp häufig für mobile Anwendungen genutzt, beispielsweise in Kraftfahrzeugen.

Weiterhin sind Hochtemperaturbrennstoffzellen bekannt, sogenannte SOFC-Systeme ("solid oxide fuel cell"). Diese Systeme arbeiten beispielsweise im Temperaturbereich von zirka 800 °C, wobei ein Feststoffelektrolyt ("solid oxide") in der Lage ist, den Transport von Sauerstoffionen zu übernehmen. Der Vorteil von derartigen Hochtemperaturbrennstoffzellen gegenüber PEM-Systemen besteht insbesondere in der Robustheit gegenüber mechanischen und chemischen Belastungen.

Als Anwendungsgebiet für Brennstoffzellen in Verbindung mit den gattungsgemäßen Systemen kommen neben stationären Anwendungen insbesondere Anwendungen im Kraftfahrzeugbereich in Frage, beispielsweise als "auxiliary power unit" (APU).

Der Erfindung liegt die Aufgabe zugrunde, die gattungsgemäßen Systeme derart weiterzubilden, dass sich ein verbesserter Wirkungsgrad ergibt, insbesondere indem die Rückgewinnung von Wasser und Wasserstoff aus Anodenabgas eines Brennstoffzellenstacks ermöglicht wird.

Diese Aufgabe wird durch die Merkmale des Anspruchs 1 gelöst.

Vorteilhafte Weiterbildungen und Ausgestaltungen der Erfindung ergeben sich aus den abhängigen Ansprüchen.

Das erfindungsgemäße System baut auf dem gattungsgemäßen Stand der Technik dadurch auf, dass im Bereich mit dem kleinsten Durchmesser zweite Gaszufuhrmittel vorgesehen sind. Dadurch, dass erfindungsgemäß zwei Gaszufuhrmittel vorgesehen sind, ist es beispielsweise möglich, über das eine Gaszufuhrmittel Luft und über das andere Gaszufuhrmittel Anodenabgas einzubringen. Obwohl das Zuführen von Anodenabgas zur Wiedergewinnung von Wasser und Wasserstoff als besonders vorteilhaft erachtet wird, umfasst die Erfindung auch Ausführungsformen, bei denen beispielsweise Luft über die einen Gaszufuhrmittel eingebracht wird, während über die anderen Gaszufuhrmittel irgendein geeignetes Gas zugeführt wird.

Bei besonders bevorzugten Ausführungsformen des erfindungsgemäßen Systems ist jedoch vorgesehen, dass die zweiten Gaszufuhrmittel zum Zuführen von Anodenabgas eines Brennstoffzellenstacks vorgesehen sind. Dadurch wird die bereits mehrfach erwähnte zumindest teilweise Rückgewinnung von Wasser und Wasserstoff aus dem Anodenabgas ermöglicht.

Weiterhin wird es als vorteilhaft erachtet, dass die zweiten Gaszufuhrmittel zumindest einen Durchbruch in dem Bereich mit dem kleinsten Durchmesser umfassen. Aufgrund der sich im Betrieb in der Düse einstellenden Druckverhältnisse ergibt sich im Bereich des Durchbruchs ein Sog, so dass das über die zweiten Gaszufuhrmittel zugeführte Gas von der Strömung in der Düse mitgerissen wird.

Als besonders vorteilhaft wird in diesem Zusammenhang erachtet, dass die zweiten Gaszufuhrmittel zumindest zwei Durchbrüche in dem Bereich mit dem kleinsten Durchmesser umfassen, wobei die zumindest zwei Durchbrüche durch einen außerhalb der Düse vorgesehenen Kanal verbunden sind. Der außerhalb der Düse vorgesehene Kanal ist dabei über geeignete Anschluss- und Leitungseinrichtungen in geeigneter Weise mit der jeweiligen Gasquelle verbunden, beispielsweise mit der Anodenseite eines Brennstoffzellenstacks.

Weiterhin wird bevorzugt, dass die ersten Gaszufuhrmittel zum Zuführen von Luft vorgesehen sind. Beispielsweise können die ersten Gaszufuhrmittel eine Kammer umfassen, die sich an den Düsenabschnitt in geeigneter Weise anschließt und die weiterhin in geeigneter Weise mit einem Luftkanal verbunden ist.

Eine ebenfalls besonders bevorzugte Weiterbildung der Erfindung sieht vor, dass die Brennstoffzuführung zumindest einen Brennstoffaustritt aufweist, der zwischen dem Bereich mit dem kleinsten Durchmesser und dem Reaktionsraum angeordnet ist. Dabei wird besonders bevorzugt, dass der Brennstoffaustritt derart beabstandet von dem Bereich mit dem kleinsten Durchmesser angeordnet ist, dass die Strömungsverhältnisse in diesem Bereich nicht in nachteilhafter Weise beeinträchtigt werden.

Es wird ebenfalls als vorteilhaft erachtet, dass die Brennstoffzuführung zumindest einen Brennstoffaustritt aufweist, der im Bereich der Längsachse der Düse angeordnet ist. Eine derartige Anordnung des Brennstoffaustritts ergibt eine besonders gute Vermischung des Brennstoffs und des durch die Düse strömenden Gases beziehungsweise Gasgemisches.

In diesem Zusammenhang kommen insbesondere Ausführungsformen in Betracht, bei denen vorgesehen ist, dass die Brennstoffzuführung zumindest eine Einspritzeinrichtung umfasst. Als Einspritzeinrichtung kommt beispielsweise ein Einspritzventil oder eine Sprühdüse in Betracht.

Insbesondere in diesem Zusammenhang kann weiterhin vorgesehen sein, dass die Brennstoffzuführung eine Brennstoffleitung umfasst, die sich durch eine Öffnung der Düse erstreckt. Die Brennstoffleitung erstreckt sich dabei vorzugsweise unter Abdichtung durch die Öffnung. Die Brennstoffleitung kann entweder so ausgestaltet sein, dass sie die Strömung in der Düse möglichst wenig beeinflusst, aber auch so, dass sie erwünschte Strömungseigenschaften aktiv hervorruft.

Weiterhin kommen Ausführungsformen in Betracht, bei denen vorgesehen ist, dass sich Abschnitte der Brennstoffzuführung durch den Bereich mit dem kleinsten Durchmesser hindurch erstreckt. In diesem Fall kann der Bereich mit dem kleinsten Durchmesser in vorteilhafter Weise etwas größer ausgelegt werden, da sich aufgrund der durch diesen Bereich hindurchgeführten Brennstoffzuführung ein ringförmiger Durchlassbereich ergibt. Dabei kann die Brennstoffzuführung beispielsweise nach Art eines Rohrs ausgebildet werden, insbesondere eines in Längsrichtung der Düse verschiebbaren Rohrs. Im zuletzt genannten Fall ist es möglich, den Brennstoffauslass auf der Längsachse der Düse verschiebbar auszugestalten.

Gemäß einem weiteren wichtigen Grundgedanken der Erfindung ist vorgesehen, dass der Diffuser direkt mit dem Reaktionsraum in Verbindung steht. Diese Lösung ist insbesondere vorteilhaft, weil beim Stand der Technik häufig Übergangsstücke zwischen dem Diffuserausgang und dem Reformereingang vorgesehen werden mussten, insbesondere um den Durchmesser des Diffuserausgangs an den Durchmesser des Reformereingangs anzupassen. Durch derartige Zwischenstücke kann es zu unerwünschten Druckverlusten kommen. Weiterhin vergrößern derartige Zwischenstücke die Gesamtabmessungen und das Gesamtgewicht, was insbesondere bei mobilen Anwendungen nachteilig ist.

Im vorstehend erläuternden Zusammenhang wird insbesondere bevorzugt, dass der Diffuser einen sich stetig erweiternden Durchmesser aufweist. Eine sich stetig erweiternde Geometrie des Diffusers verhindert insbesondere unerwünschte Druckstufen oder Strömungsabrisse.

In vielen Fällen werden gute Strömungs- und Mischverhältnisse erzielt, wenn vorgesehen ist, dass der Diffuser einen sich linear erweiternden Durchmesser aufweist. Dies führt zu einem sich trichterförmig erweiternden Diffuser, wobei der Ausgangsdurchmesser des Diffusers in besonders vorteilhafter Weise an den Eingangsdurchmesser des Reformereingangs angepasst ist.

Weiterhin wird bevorzugt, dass der Reformer, die Düse und die Brennstoffzuführung eine Baugruppe bilden. Eine derartige Baugruppe führt zu einem besonders kompakten Aufbau, was die Systemintegration erheblich erleichtert.

Bevorzugte Ausführungsformen der Erfindung werden nachfolgend anhand der zugehörigen Zeichnungen beispielhaft erläutert.

Es zeigen:
- Figur 1: eine schematische Darstellung einer ersten Ausführungsform des erfindungsgemäßen Systems; und
- Figur 2: eine schematische Darstellung einer zweiten Ausführungsform des erfindungsgemäßen Systems.

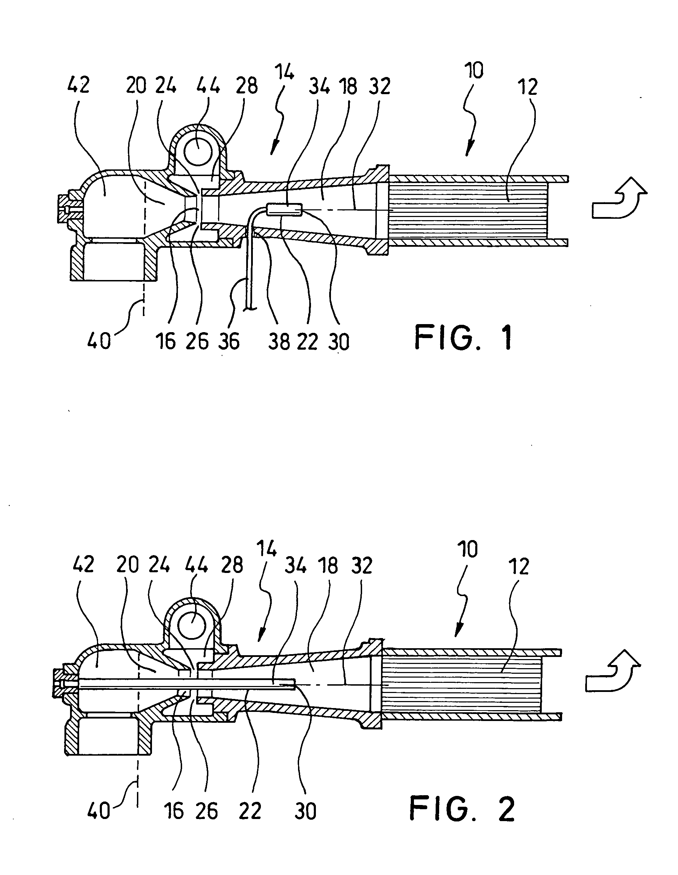

Die in Figur 1 dargestellte Ausführungsform des erfindungsgemäßen Systems zum Umsetzen von Brennstoff und Luft zu Reformat umfasst einen Reformer 10, der einen Reaktionsraum 12 aufweist, eine Düse 14 zum Zuführen eines Brennstoff/Luft-Gemisches zu dem Reaktionsraum 12 und eine Brennstoffzuführung 22 zum Zuführen von Brennstoff in die Düse 14. Die Düse 14 ist rechts von der gestrichelten Linie 40 nach Art einer Venturidüse ausgebildet. Dieser nach Art einer Venturidüse ausgebildete Abschnitt der Düse 14 weist einen Bereich 16 auf, in dem der Durchmesser der Düse 14 am kleinsten ist. Zwischen diesem Bereich 16 mit dem kleinsten Durchmesser und dem Reformer 10 erstreckt sich ein Diffuser 18. Bei der dargestellten Ausführungsform weist der Diffuser 18 einen sich linear erweiternden Durchmesser auf, wobei der Ausgangsdurchmesser des Diffusers 18 mit dem Eingangsdurchmesser des Reaktionsraums 12 übereinstimmt. Aus diesem Grund kann auf jegliche Adapterstücke zwischen der Düse 14 und dem Reformer 10 verzichtet werden, was einen kompakten Aufbau des Systems ermöglicht. Darüber hinaus werden durch diese Geometrie Druckverluste und Strömungsabrisse vermieden. Links von dem Bereich 16 mit dem kleinsten Durchmesser bildet die Düse 14 erste Gaszufuhrmittel 20, die mit einer links von der gestrichelten Linie 40 vorgesehenen Kammer 42 verbunden sind. Im dargestellten Fall wird über die Kammer 42 Luft als erstes Gas zugeführt. Im Bereich 16 mit dem kleinsten Durchmesser ist ein erster Durchbruch 24 und ein zweiter Durchbruch 26 vorgesehen, wobei diese Durchbrüche 24, 26 zweite Gaszufuhrmittel 26, 28 bilden. Der erste Durchbruch 24 und der zweite Durchbruch 26 sind durch einen Kanal 28 verbunden, der einen Anschluss 44 aufweist. Im dargestellten Fall ist der Anschluss 44 dazu vorgesehen, in geeigneter Weise mit der Anodenseite eines Brennstoffzellenstacks verbunden zu werden, so dass den Durchbrüchen 24, 26 über den Kanal 28 Anodenabgas zugeführt werden kann. Es ist darauf hinzuweisen, dass im Bereich 16 mit dem kleinsten Durchmesser ein Sog herrscht, der das Zuströmen des Anodenabgases als zweites Gas über die Durchbrüche 24, 26 erleichtert. Das Recyceln des A-nodenabgases ist vorteilhaft, da in diesem enthaltenes Wasser und in diesem enthaltener Wasserstoff durch den Reformationsprozess zumindest teilweise wiedergewonnen werden kann. Bei der in Figur 1 dargestellten Ausführungsform umfasst die Brennstoffzuführung 22 eine Einspritzeinrichtung 34, beispielsweise eine Diesel-Einsprühdüse, mit einem Brennstoffaustritt 30. Die Einspritzeinrichtung 34 mit dem Brennstoffaustritt 30 ist im dargestellten Fall auf der mit 32 bezeichneten Längsachse der Düse 14 angeordnet, und zwar derart von dem Bereich 16 mit dem kleinsten Durchmesser beabstandet, dass die Strömung in der Düse zumindest nicht übermäßig nachteilig beeinflusst wird. Im dargestellten Fall ist die Einspritzeinrichtung 34 ungefähr in der Mitte zwischen dem Bereich 16 mit dem kleinsten Durchmesser und dem Ausgang des Diffusers 18 beziehungsweise dem Eingang des Reaktionsraum 12 angeordnet. Die Einspritzeinrichtung 34 ist mit einer Brennstoffleitung 36 verbunden, die durch eine Öffnung 38 in der Düse 14 geführt ist, unter Abdichtung. Das in dem Reaktionsraum 12 aus der Luft, dem Anodenabgas und dem Brennstoff erzeugte Reformat wird einem nicht dargestellten Brennstoffzellenstack zugeführt, wie durch den Pfeil angedeutet.

Die in Figur 2 dargestellte Ausführungsform des erfindungsgemäßen Systems unterscheidet sich durch die Auslegung der Brennstoffzufuhr 22 von der Ausführungsform nach Figur 1. Bei der in Figur 2 dargestellten Ausführungsform umfasst die Brennstoffzufuhr 22 ein rohrförmiges Einspritzelement 34, das sich durch den Bereich 16 mit dem kleinsten Durchmesser erstreckt, so dass sich im Bereich 16 mit dem kleinsten Durchmesser eine ringförmige Durchlassgeometrie ergibt. Die rohr- oder stabförmige Einspritzeinrichtung 34 weist einen Brennstoffaustritt 30 auf, der wieder auf der Längsachse 32 der Düse 14 liegt. Im dargestellten Fall erstreckt sich die Brennstoffzufuhr 22 durch die Kammer 42, wobei vorgesehen sein kann, dass die gesamte Brennstoffzufuhr 22 in axialer Längsrichtung der Düse 14 verschiebbar ist, so dass der Brennstoffaustritt 30 auf der Längsachse 32 hin und her verschoben werden kann, beispielsweise um die in dem Diffuser 18 erzielte Mischwirkung für verschiedene Betriebszustände zu optimieren. Im Übrigen wird auf die Beschreibung der Figur 1 verwiesen.

In vielen Fällen ist es möglich, den Durchmesser des Bereichs 16 mit dem kleinsten Durchmesser bei Ausführungsformen entsprechend der Figur 1 kleiner auszulegen als bei Ausführungsformen entsprechend der Figur 2. Weiterhin kann der Öffnungswinkel des Diffusers 18 bei Ausführungsformen entsprechend der Figur 2 kleiner gewählt werden, was zu einer höheren Expansionseffizienz führt. Zusätzlich oder alternativ kann der Diffuser bei Ausführungsformen entsprechend der Figur 2 kürzer ausgelegt werden, was die Gesamtlänge des Systems beziehungsweise dessen Volumen verringert.

Durch den kompakten Aufbau des erfindungsgemäßen Systems, der insbesondere aufgrund von überflüssigen Adapterstücken zwischen dem Diffuser und dem Reformer möglich wird, kann Volumen und Masse eingespart werden, was insbesondere bei mobilen Anwendungen vorteilhaft ist. Die stetige, insbesondere gleichmäßige Erweiterung des Diffusers trägt dazu bei, dass auf Einrichtungen zwischen der Düse 14 und dem Reformer 10 zur Ausrichtung der Strömung verzichtet werden kann. Insgesamt werden Druckverluste verringert und die Rezirkulationsrate kann erhöht werden, was den Wirkungsgrad des erfindungsgemäßen Systems erhöht.
Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Reformer
- 12: Reaktionsraum
- 14: Düse
- 16: Bereich mit dem kleinsten Durchmesser
- 18: Diffuser
- 20: erste Gaszufuhrmittel
- 22: Brennstoffzufuhr
- 24: zweite Gaszufuhrmittel/erster Durchbruch
- 26: zweite Gaszufuhrmittel/zweiter Durchbruch
- 28: Kanal
- 30: Brennstoffaustritt
- 32: Längsachse der Düse
- 34: Einspritzeinrichtung
- 36: Brennstoffleitung
- 38: Öffnung
- 40: gestrichelte Linie
- 42: Kammer
- 44: Anschluss

## Patentansprüche

1. System zum Umsetzen von Brennstoff und Luft zu Reformat, mit:
- einem Reformer (10), der einen Reaktionsraum (12) aufweist,
- einer zumindest abschnittsweise nach Art einer Venturidüse ausgebildeten Düse (14) zum Zuführen eines Brennstoff/Luft-Gemisches zu dem Reaktionsraum (12), wobei der nach Art einer Venturidüse ausgebildete Abschnitt der Düse (14) aufweist:
- einen Bereich (16) mit einem kleinsten Durchmesser,
- einen sich zwischen dem Bereich mit dem kleinsten Durchmesser und dem Reaktionsraum (12) erstreckenden Diffuser (18) und
- erste Gaszufuhrmittel (20) auf der dem Diffuser (18) abgewandten Seite des Bereichs (16) mit dem kleinsten Durchmesser, und
- einer Brennstoffzuführung (22) zum Zuführen von Brennstoff in die Düse (14),
**dadurch gekennzeichnet, dass** im Bereich (16) mit dem kleinsten Durchmesser zweite Gaszufuhrmittel (24, 26) vorgesehen sind.

2. System nach Anspruch 1, **dadurch gekennzeichnet, dass** die zweiten Gaszufuhrmittel (24, 26) zum Zuführen von Anodenabgas eines Brennstoffzellenstacks vorgesehen sind.

3. System nach Anspruch 1 oder 2, **dadurch gekennzeichnet, dass** die zweiten Gaszufuhrmittel (24, 26) zumindest einen Durchbruch (24, 26) in dem Bereich (16) mit dem kleinsten Durchmesser umfassen.

4. System nach Anspruch 3, **dadurch gekennzeichnet, dass** die zweiten Gaszufuhrmittel (24, 26) zumindest zwei Durchbrüche (24, 26) in dem Bereich (16) mit dem kleinsten Durchmesser umfassen, wobei die zumindest zwei Durchbrüche (24, 26) durch einen außerhalb der Düse (14) vorgesehenen Kanal (28) verbunden sind.

5. System nach einem der vorangehenden Ansprüche, **dadurch gekennzeichnet, dass** die ersten Gaszufuhrmittel (20) zum Zuführen von Luft vorgesehen sind.

6. System nach einem der vorangehenden Ansprüche, **dadurch gekennzeichnet, dass** die Brennstoffzuführung (22) zumindest einen Brennstoffaustritt (30) aufweist, der zwischen dem Bereich (16) mit dem kleinsten Durchmesser und dem Reaktionsraum (12) angeordnet ist.

7. System nach einem der vorangehenden Ansprüche, **dadurch gekennzeichnet, dass** die Brennstoffzuführung (22) zumindest einen Brennstoffaustritt (30) aufweist, der im Bereich (16) der Längsachse (32) der Düse (14) angeordnet ist.

8. System nach einem der vorangehenden Ansprüche, **dadurch gekennzeichnet, dass** die Brennstoffzuführung (22) zumindest eine Einspritzeinrichtung (34) umfasst.

9. System nach einem der vorangehenden Ansprüche, **dadurch gekennzeichnet, dass** sich die Brennstoffzuführung (22) eine Brennstoffleitung (36) umfasst, die sich durch eine Öffnung (38) der Düse (14) erstreckt.

10. System nach einem der vorangehenden Ansprüche, **dadurch gekennzeichnet, dass** sich Abschnitte die Brennstoffzuführung (22) durch den Bereich mit dem kleinsten Durchmesser hindurch erstreckt.

11. System nach einem der vorangehenden Ansprüche, **dadurch gekennzeichnet, dass** der Diffuser (18) direkt mit dem Reaktionsraum (12) in Verbindung steht.

12. System nach einem der vorangehenden Ansprüche, **dadurch gekennzeichnet, dass** der Diffuser (18) einen sich stetig erweiternden Durchmesser aufweist.

13. System nach Anspruch 12, **dadurch gekennzeichnet, dass** der Diffuser (18) einen sich linear erweiternden Durchmesser aufweist.

14. System nach einem der vorangehenden Ansprüche, **dadurch gekennzeichnet, dass** der Reformer (10), die Düse (14) und die Brennstoffzuführung (22) eine Baugruppe bilden.
